# NOUVEAU FASCICULE DE BREVET EUROPEEN

(11) **EP 0 665 862 B2**
(45) Date de publication et mention de la décision concernant l'opposition: **12.11.2003**
(45) Mention de la délivrance du brevet: 05.02.1997
(21) Numéro de dépôt: 93924094.1
(22) Date de dépôt: 19.10.1993
(51) Int. Cl.: C08J 3/03, C08J 3/26, C09D 5/18, C08L 83/04

(54) **DISPERSIONS AQUEUSES A BASE D'HUILES SILICONES POUVANT RETICULER PAR ELIMINATION DE L'EAU ET LEUR UTILISATION A LA REALISATION DE JOINTS ELASTOMERES SILICONES**
WÄSSRIGE, DURCH WASSERABSPALTUNG HÄRTENDE SILICONÖLDISPERSIONEN UND DEREN VERWENDUNG ALS ELASTISCHE DICHTUNGSMATERIALIEN
AQUEOUS DISPERSIONS BASED ON SILICONE OILS CROSS-LINKABLE BY WATER REMOVAL AND THEIR USE AS ELASTIC SEALINGS

(30) Priorité: 20.10.1992 FR 9212518
(43) Date de publication de la demande: 09.08.1995
(73) Titulaire: RHODIA CHIMIE, 92408 Courbevoie Cédex (FR)
(72) Inventeur: FEDER, Michel, F-69003 Lyon (FR); ULRICH, Jean, F-69360 Thernay (FR)
(74) Mandataire: Trolliet, Maurice
(86) Numéro de dépôt international: FR9301027
(87) Numéro de publication internationale: WO94009059

(56) Documents cités:
- EP-A- 0 270 898
- EP-A- 0 364 375
- EP-A- 0 387 157
- EP-A- 0 403 400
- EP-A- 0 404 027
- EP-A- 0 463 431
- DE-A- 1 644 952
- DE-A- 2 555 048
- DE-A- 3 932 025
- US-A- 4 814 376
- Ullmann's Encyclopedia of Industrial Chemistry, 5th ed.,Vol.A9, p.325, VCH, Weinheim 1987
- Römpp Chemie Lexikon, 8.Auflage, p.1715, Franckh'sche Verlagshandlung, Stuttgart, 1983
- Tensid-Taschenbuch, 3.Ausg.,pp.14-15, Carl Hanser Verlag, München, Wien, 1990
- Protokoll Coulter, Wacker-Chemie, vom 23.10.1996

## Description

La présente invention a pour objet de nouvelles dispersions aqueuses à base d'huiles silicones visqueuses pouvant réticuler en un élastomère par élimination de l'eau, leur procédé de préparation et leur utilisation à la réalisation de produits ou de revêtements élastomères silicones pour le bâtiment, notamment de joints d'étanchéité, peintures.

Il est connu que l'incorporation d'agents de réticulation (notamment du type silice colloïdale, silicate alcalin, polyalcoxysilane, polyalcényloxysilane, polyacyloxysilane, polycétiminoxysilane, polyamino- ou polyamido-silane, siliconate, polysilicate, résine silsesquioxane, résine silicone réactive hydroxylée, alcoxylée ou acyloxylée), à une émulsion aqueuse d'huile silicone hydroxylée permet, après incorporation de charges et de catalyseurs organométalliques, d'obtenir une dispersion capable de réticuler en un élastomère par élimination de l'eau (US-A-4 221 688 ; US-A-4 244 849 ;US-A-3 355 406 ; US-A-3 294 725 ; US-A-4 584 341 ; US-A-4 618 642 ; US-A-4 608 412 ; US-A-4 554 187 ; EP-A- 266 729 ; EP -A- 332 544 ; EP -A- 304 719 ; EP-A-365 439 ; FR-A-2 642 765 ; FR-A- 2 637 606 ; FR-A- 2 638 166 ).

Pour obtenir une émulsion aqueuse d'huile silicone hydroxylée, il est connu de partir d'une huile hydroxylée déjà polymérisée et de la mettre en émulsion aqueuse en stabilisant les émulsions par un agent tensio-actif anionique et/ou non-ionique (brevets FR-A-2 064 563 ; FR-A- 2 114 230 ; FR -A- 2 094 322 ; EP -A- 169 098). Les procédés traditionnels (mettant en oeuvre des appareils du type broyeur colloïdal, homogénéiseur) sont limités à la mise en émulsion de polymères de viscosité inférieure à environ 5 000 mPa.s. ; on parvient toutefois à émulsifier difficilement des huiles plus visqueuses mais au détriment de la granulométrie et donc de la stabilité de l'émulsion obtenue, granulométrie restant très grossière, très supèrieure à 1 micromètre. C'est la raison pour laquelle l'émulsion d'huile silicone réactive mise en oeuvre est généralement obtenue par polymérisation en émulsion d'oligomères cycliques ou linéaires de bas poids moléculaire, faciles à émulsifier selon les procédés classiques, c'est-à-dire en utilisant un tensio-actif anionique jouant également de préférence le rôle de catalyseur de polymérisation (US-A- 3 294 725 ; US-A- 3 360 491 ; DE-A-3.932.025).

D'après l'enseignement de US-A- 4 608 412, des polymères dispersés de très hauts poids moleculaires (Mw > 200 000) sont nécessaires à l'obtention de mastics ayant de bonnes propriétés mécaniques, notamment d'allongement à la rupture élevé, avant et après stockage de la dispersion en cartouche étanche ; selon ce procédé, les dispersions aqueuses sont obtenues par polymérisation en émulsion en présence obligatoirement d'un agent tensio-actif ionique, le plus souvent anionique, ce qui nuit à la stabilité du mastic et diminue les performances de celui-ci (par exemple adhérence, propriétés mécaniques).

La demanderesse a maintenant trouvé des dispersions aqueuses à base d'huiles silicones visqueuses α,ω-fonctionnelles stables au stockage (car préparées à partir d'émulsions aqueuses d'huiles silicones de fine granulométrie et ne contenant pas d'agent tensio-actif anionique) et susceptibles de réticuler par élimination de l'eau en élastomères de propriétés mécaniques élevées ; en outre ces dispersions ont comme avantage celui d'être préparées en utilisant un appareil classique de malaxage et celui de contenir, en concentration élevée, un polymère silicone dispersé de degré de polymérisation mieux maîtrisé (par rapport à celui d'un polymère obtenu par polymérisation en émulsion).

Selon l'invention, il s'agit de dispersions aqueuses comprenant :
- au moins une huile organopolysiloxane (A) susceptible de réticuler par condensation, si nécessaire en présence d'un agent de réticulation (B), en un élastomère ;
- si nécessaire, pour 100 parties en poids d'huile(s) (A), de 0,1 à 100 parties en poids d'au moins un agent de réticulation (B) ;
- éventuellement, pour 100 parties en poids d'huile(s) (A), jusqu'à 50 parties en poids d'au moins un silane (C) ;
- jusqu'à 300 parties en poids d'une charge minérale siliceuse et/ou non siliceuse (D), pour 100 parties en poids d'huile(s) (A) ;
- une quantité catalytiquement efficace d'un composé catalytique de durcissement (E) pouvant aller jusqu'à 3 parties en poids pour 100 parties d'huile (A) ;
lesdites dispersions étant caractérisées en ce qu' elles sont obtenues par un procédé comprenant les étapes suivantes :
→ 1) mise en émulsion d'une phase silicone réalisée par malaxage d'un mélange constitué de :
   . 100 parties en poids d'une phase silicone (F) de viscosité dynamique à 25 °C de l'ordre de 50 à 1000 Pa.s., phase silicone comprenant l'huile ou mélange d'huiles (A) et éventuellement au moins un des constituants (B), (C), (D) ou (E) ;
   . 3-20 parties en poids d'au moins un agent tensio-actif (G) de nature non-ionique, le HLB dudit agent tensio-actif ou du mélange d'agents tensio-actifs étant d'au moins 10 ;
   . 2-20 parties en poids d'eau ;

   - le rapport pondéral eau / eau + agent(s) tensio-actif(s) étant tel que la viscosité du mélange eau + agent(s) tensio-actif(s) soit voisine de ou supérieure à celle de la phase silicone (F) et se situant dans l'intervalle allant de 20/100 à 70/100 ;
   - l'opération de malaxage étant réalisée dans un malaxeur muni d'un agitateur, agitateur dont la portée mobile ne tourne pas à plus de 500 tours/min, avec une vitesse tangentielle en extrémité de partie mobile ne dépassant pas 2,5 m/s et avec un rapport vitesse tangentielle en extrémité de partie mobile / distance entre l'extrémité de la partie mobile et la paroi du malaxeur qui est inférieure à 2500 s⁻¹, pendant une durée suffisante pour obtenir une émulsion "huile dans eau" de granulométrie de l'ordre de 0,1 à 5 micromètres ;
→ 2) dilution éventuelle avec de l'eau jusqu'à obtenir un extrait sec de 25 à 97 % ; puis
→ 3) addition du ou des constituant(s) non présent(s) dans la phase silicone (F), qui sont dispersés dans le milieu par malaxage.

De préférence, les dispersions aqueuses d'huiles silicones comprennent :
- au moins une huile organopolysiloxane (A) susceptible de réticuler par condensation, si nécessaire en présence d'un agent de réticulation (B), en un élastomère ;
- si nécessaire, pour 100 parties en poids d'huile(s) (A), de 0,5 à 30 parties en poids d'au moins un agent de réticulation (B) ;
- éventuellement, pour 100 parties en poids d'huile(s) (A), jusqu'à 10 parties en poids d'au moins un silane (C) ;
- de 3 à 100 parties en poids d'une charge minérale siliceuse et/ou non siliceuse (D), pour 100 parties en poids d'huile(s) (A) ;
- une quantité catalytiquement efficace d'un composé catalytique de durcissement (E) pouvant aller jusqu'à 3 parties en poids pour 100 parties d'huile (A) ;
lesdites dispersions étant obtenues par un procédé comprenant les étapes suivantes :
→ 1) mise en émulsion d'une phase silicone, réalisée par malaxage d'un mélange constitué de :
   . 100 parties en poids d'une phase silicone (F) de viscosité dynamique à 25 °C de l'ordre de 50 à 1.000 Pa.s., phase silicone comprenant l'huile ou mélange d'huiles (A) et éventuellement au moins un des constituants (B), (C), (D) ou (E) ;
   . 5-15 parties en poids d'au moins un agent tensio-actif (G) non-ionique, le HLB dudit agent tensio-actif ou du mélange d'agents tensio-actifs étant compris entre 10 et 15 ;
   . 3-15 parties en poids d'eau ;

   - le rapport pondéral eau / eau+agent(s) tensio-actif(s) étant tel que la viscosité du mélange eau + agent(s) tensio-actif(s) soit voisine de ou supérieure à celle de la phase silicone (F) et se situant dans l'intervalle allant de 20/100 à 70/100 ;
   - l'opération de malaxage étant réalisée dans un malaxeur muni d'un agitateur, agitateur dont la portée mobile ne tourne pas à plus de 500 tours/min, avec une vitesse tangentielle en extrémité de partie mobile ne dépassant pas 2,5 m/s et avec un rapport vitesse tangentielle en extrémité de partie mobile / distance entre l'extrémité de la partie mobile et la paroi du malaxeur qui est inférieure à 2500 s⁻¹, pendant une durée suffisante pour obtenir une émulsion "huile dans eau" de granulométrie de l'ordre de 0,2 à 2 micromètres ;
→ 2) dilution éventuelle avec de l'eau jusqu'à obtenir un extrait sec supérieur à 70 % ; puis
→ 3) addition du ou des constituant(s) non présent(s) dans la phase silicone (F), qui sont dispersés dans le milieu par malaxage.

Pour une bonne réalisation de l'invention, la détermination de la viscosité dynamique de la phase silicone (F) peut être faite par exemple à l'aide d'un viscosimètre Brookfield selon la norme AFNOR NFT 76 102 de février 1972.

Les huiles (A) sont des huiles α,ω-hydroxylées ou des huiles fonctionnelles comportant par molécule au moins 2 groupes fonctionnels condensables éventuellement après hydrolyse ; elles peuvent être représentées par la formule générique (I) 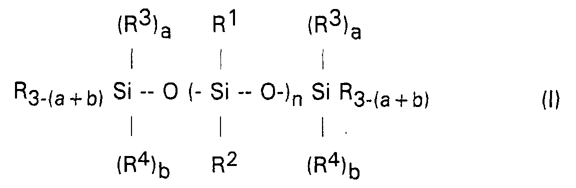 formule dans laquelle
- a est 0 ou 1
- b est 0 ou 1
- avec a+b = 0 ; 1 ou 2
- n a une valeur suffisante pour conférer au polymère de formule (a) la viscosité désirée

- les radicaux R sont identiques ou différents et représentent
   . un groupe OH avec a+b = 2 ;
   . un groupe alcoxy ou alcényloxy contenant de 1 à 10 atomes de carbone ;
   . un groupe aryloxy contenant de 6 à 13 atomes de carbone ;
   . un groupe acyloxy contenant de 1 à 13 atomes de carbone ;
   . un groupe cétiminoxy contenant de 1 à 8 atomes de carbone ;
   . un groupe amino- ou amido-fonctionnel contenant de 1 à 6 atomes de carbone, liés au silicium par une liaison Si-N ;
- les radicaux R¹ et R² sont identiques ou différents et représentent des groupes organiques aliphatiques alkyle, alcényle, ayant de 1 à 10 atomes de carbone, aromatiques phenyle, lesdits groupes étant éventuellement substitués par des atomes d'halogènes ou des groupes cyano, de préférence au moins 80% desdits radicaux représentant un groupe méthyle ;
- les radicaux R³et R⁴ sont identiques ou différents et représentent des groupes organiques aliphatiques alkyle, aminoalkyle, polyaminoalkyle, époxyalkyle, alcényle, contenant de 1 à 13 atomes de carbone, aromatiques aryle contenant de 6 à 13 atomes de carbone ;
au moins 2 et de préférence au moins 3 groupes fonctionnels condensables éventuellement après hydrolyse étant présents par molécule et de préférence au moins 80 % des radicaux R1 à R4 représentant un groupe méthyle.

A titre d'exemple de radicaux R, on peut citer les groupes :
. alkoxy tels que par exemple méthoxy, éthoxy, octyloxy ;
. alcényloxy tels que par exemple vinyloxy, héxényloxy, isopropényloxy ;
. aryloxy tels que par exemple phényloxy ;
. acyloxy tels que par exemple acetoxy ;
. cétiminoxy tels que par exemple ON=C(CH₃)C₂H₅ ;
. aminofonctionnels tels que par exemple éthylamino, phénylamino ;
. amidofonctionnels tels que par exemple méthylacétamido ;

Parmi les radicaux organiques aliphatiques ou aromatiques mentionnés ci-dessus, on peut citer en ce qui concerne
. R¹, R² : par exemple les groupes méthyle, éthyle, octyle, trifluoropropyle, vinyle, phényle ;
. R³, R⁴ : par exemple les groupes méthyle, éthyle, octyle, vinyle, allyle, phényle ;
-(CH₂)₃-NH₂ ; -(CH₂)₃-NH-(CH₂)₂-NH₂ ;

A titre d'exemples concrets de motifs R¹R²SiO présents dans l'huile (A) on peut citer:
(CH₃)₂SiO ; CH₃(CH₂=CH)SiO ; CH₃(C₆H₅)SiO ; (C₆H₅)₂SiO.

A titre d'exemples concrets de motifs RR₃R₄SiO on peut citer :
(CH₃)₂(OH)SiO ; (OCH₃)₃SiO ; [O-C(CH₃)=CH₂]₃SiO ; [ON=C(CH₃)]₃SiO ; (NH-CH₃)₃SiO ; (NH-CO-CH₃)₃SiO.

Un agent de réticulation (B) doit être mis en oeuvre lorsque l'huile (A) est un polymère α,ω-(dihydroxy)polydiorganosiloxane.
De nombreux agents de réticulation peuvent être utilisés selon des quantités fonctions de leur nature ; ceux-ci sont bien connus de l'homme de l'art.
On trouvera ci-dessous, à titre d'exemple, une liste d'agents de réticulation avec les quantités correspondantes préconisées, exprimées en parties en poids pour 100 parties d'huile (A) :
. 0,1 à 10 parties de silice colloïdale
. 0,5 à 10 parties de silicate de soude
. 1 à 15 parties de silice en poudre (silice de pyrogénation ou de précipitation)
. 0,1 à 15 parties d'un organosiliconate de métal alcalin (brevet européen EP -A- 266 729)
. 1 à 100 parties d'une microémulsion de résine silsesquioxane (brevets US -A- 3 355 406 ; 3 433 780)
. 5 à 100 parties d'une résine silicone réactive de faible masse moléculaire présentant des groupes alcoxy et acyloxy (US -A- 4 554 187)
. 5 à 100 parties d'une résine silicone de haute masse insoluble dans le toluène (EP - A- 304 719)
. 5 à 100 parties d'une résine silicone hydroxylée constituée de motifs de formules R'₃SiO_{0,5} (M) et/ou R'₂SiO (D), associés à des motifs de formules R'SiO_{1,5} (T) et/ou SiO₂ (Q), R' étant principalement un radical alkyle en C₁-C₆, vinyle et trifluoro-3,3,3 propyle et une teneur en poids en groupe hydroxyle comprise entre 0,1 et 10 %. Parmi ces résines, on peut citer tout particulièrement les résines MQ, MDQ, TDM, TD (FR-A-2 638 166).
. 1 à 20 parties d'un silane de formule

   (R")ᵤ Si X₍₄₋ᵤ₎
formule dans laquelle R" est un radical organique monovalent, en particulier méthyle ou vinyle, u est égal à 1 ou 0, X est un groupe condensable et/ou hydrolysable organique de même définition que le radical R de la formule (I) ci-dessus (alcoxy, alcényloxy, acyloxy, cétiminoxy, alkylamino, alkylamido silanes décrits notamment dans US -A-3 294 725 ; US-A-4 584 341 ; US-A-4 618 642 ; US-A-4 608 412 ; US-A-4 525 565 ; EP-A-387157 ; EP-A-340 120 ; EP-A-364 375 ; FR-A-1 248 826 ; FR - 1 023477).
A titre d'exemples on peut citer les alcoxysilanes suivants:
Si(OC₂H₅)₄ ; CH₃Si(OCH₃)₃ ; CH₃Si(OC₂H₅)₃ ; (C₂H₅O)₃Si(OCH₃) ;
CH₂=CHSi(OCH₃)₃ ; CH₃(CH₂=CH)Si(OCH₃)₂ ; CH₂=CH(OC₂H₅)₃ ;
CH₂=CHSi[ON=C(CH₃)C₂H₅] ; CH₃Si[ON=C(CH₃)₂]₃
CH₃Si[-C(CH₃)=CH₂]₃ ;
méthyltri(N-méthylacétamidosilane); méthyltris(cyclohéxylaminosilane).

Les silanes (C) éventuellement présents dans la composition des dispersions de l'invention peuvent être des sous-produits de synthèse des huiles (A) aussi bien que que des additifs permettant de moduler les propriétés physicochimiques des compositions élastomères silicones obtenues après réticulation des dispersions faisant l'objet de l'invention.

Les silanes sous-produits de réaction de synthèse des huiles (A) peuvent être représentés par la formule

(R⁵)c Si (R)_{4-c}

formule dans laquelle
- c est 0 ;1 ou 2
- les radicaux R⁵, identiques ou différents, correspondent aux radicaux R3 et R4 de l'huile (A) de formule (I)
- le radical R correspond au radical organique R de l'huile polyorganosiloxane (A) de formule (I).
A titre d'exemples de tels silanes on peut citer les silanes réticulants mentionnés ci-dessus. Ils sont généralement présents selon des quantités de l'ordre de 0 à 10 parties en poids, de préférence de l'ordre de 0 à 5 parties en poids pour 100 parties d'huile(s) (A).

Les silanes additifs modulateurs de propriétés physicochimiques, peuvent être notamment des agents d'adhérence tels que ceux décrits dans la demande de brevet EP-A- 340 120. On peut citer notamment l'aminopropyltriéthoxysilane, l'aminopropyl-méthyldiéthoxysilane, le glycidoxypropyltriméthoxysilane. Ils sont mis en oeuvre selon des quantités pouvant aller jusqu'à 50 % , généralement de l'ordre de 0,5 à 10 % du poids d'huile(s) (A).

Des exemples de charges (D) siliceuses sont des charges renforçantes telles que la silice colloïdale, les poudres de silice de combustion et de précipitation, des charges semi-renforçantes telles que des terres de diatomées, du quartz broyé, dans la mesure où cet additif silicié n'a pas été déjà choisi comme agent de réticulation (B) ; des exemples de charges non-siliceuses sont le carbonate de calcium naturel, l'alumine hydratée, l'hydroxyde de magnésium, le noir de carbone, le dioxyde de titane, l'oxyde d'aluminium, la vermiculite, l'oxyde de zinc, le mica, le talc, l'oxyde de fer, le sulfate de baryum, la chaux éteinte ; la granulométrie de ces charges est généralement de l'ordre de 0,001 à 300 µm.

Les composés catalytiques de durcissement (E) sont bien connus de l'homme de l'art ; ce sont les sels d'acides carboxyliques et les halogénures de métaux tels que par exemple le plomb, le zinc, le zirconium, le titane, le fer, le baryum, le calcium, le manganèse et tout particulièrement l'étain.
On peut citer :
. les produits de réaction de dicarboxylates d'étain et de polysilicate d'éthyle (US - A- 3 862 919)
. les produits de réaction du diacétate de dibutylétain et d'un silicate d'alkyle ou d'un alkyltrialcoxysilane (BE-A - 842 305)
. les bischélates d'étain (EP - A- 147 323 ; 235 049)
. les dicarboxylates de diorganoétain (GB -A- 1 289 900)
Ils peuvent être mis en oeuvre selon des quantités pouvant aller jusqu'à environ 3 parties en poids, de préférence voisines de 0,05 à 1 partie en poids pour 100 parties d'huile (A).

Le (mélange de) tensio-actif (s) (G) mis en oeuvre est de nature non-ionique ; à titre d'exemples on peut citer les acides gras alcoxylés, les alkylphénols polyalcoxylés, les alcools gras polyalcoxylés, les amides gras polyalcoxylés ou polyglycérolés, les alcools et les alphadiols polyglycérolés, les polymères blocs oxyde d'éthylène-oxyde de propylène ainsi que les alkylglucosides, les alkylpolyglucosides, les sucroéthers, les sucroesters, les sucroglycérides, les esters de sorbitan et les composés éthoxylés de ces dérivés de sucres.

Le (mélange de) tensio-actif(s) est choisi en fonction de la nature de l'huile silicone (A) à émulsifier ; un HLB de l'ordre de 11 à 15 est généralement choisi pour émulsifier une huile silicone (A) constituée par un polymère α,ω-bis(hydroxy)polydiméthylsiloxane.

Le rapport pondéral eau / eau + tensio-actif(s) est fonction de la viscosité de la phase silicone (F) et de la nature du (mélange de) tensio-actif(s) ; ce rapport se situe, comme indiqué supra, dans l'intervalle allant de 20/100 à 70/100, préférentiellement de 25/100 à 60/100 pour stabiliser une émulsion d'une phase silicone consistant en une huile α,ω-dihydroxylée de viscosité de l'ordre de 50 à 500 Pa.s. à l'aide d'un nonylphénol présentant 9 ou 10 motifs éthoxy comme seul agent tensio-actif.

La phase silicone (F) mise en émulsion "huile dans eau" par malaxage en présence d'eau et d'au moins un agent tensio-actif, peut consister en :
. (F1) une huile (A) de viscosité de l'ordre de 50 à 1.000 Pa.s.
. (F2) un mélange d'huiles (A), mélange de viscosité de l'ordre de 50 à 1.000 Pa.s.
. (F3) un mélange d'au moins une huile (A) et d'au moins un agent réticulant (B) si celui-ci est nécessaire et/ou un silane (C) et/ou au moins une charge (D), mélange de viscosité de l'ordre de 50 à 1.000 Pa.s.
. (F4) un mélange d'au moins une huile (A) et du composé catalytique (E), en présence éventuellement d'au moins un silane (C) et/ou d'au moins une charge (D).

La mise en émulsion "huile dans eau" de la phase silicone est réalisée par introduction de la phase silicone dans un mélange eau + agent(s) tensio-actif(s) ou de préférence par introduction de l'eau dans un mélange phase silicone + agent(s) tensio-actif(s) et malaxage à une température de l'ordre de 10 à 50°C.

Tout appareil classique de malaxage à agitation lente peut être mis en oeuvre. Comme indiqué supra, l'opération de malaxage est réalisée dans un malaxeur muni d'un agitateur, agitateur dont la partie mobile ne tourne pas à plus de 500 tours/min avec une vitesse tangentielle en extrêmité de partie mobile ne dépassant pas 2,5m/s et avec un rapport vitesse tangentielle en extrêmité de partie mobile / distance entre l'extrémité de la partie mobile et la paroi du malaxeur qui est à 2500s⁻¹.
A titre d'exemple on peut citer les extrudeuses à vis simple ou multiple(s), les malaxeurs planétaires, les malaxeurs à crochet, les disperseurs lents, les malaxeurs statiques, les malaxeurs à pale, à hélice, à bras, à ancre.

Après dilution éventuelle du milieu, les constituants de la dispersion de l'invention non présents dans l'émulsion "huile dans eau" ainsi préparée, à savoir :
. dans le cas de l'émulsion de la phase silicone (F1), (F2) ou (F3), le composé catalytique de préférence sous forme d'une émulsion aqueuse et les autres constituants éventuels non présents dans lesdites phases ;
. dans le cas de l'émulsion de la phase silicone (F4), l'agent de réticulation (B) si celui-ci est nécessaire ainsi que les autres constituants éventuels non présents dans ladite phase ;
sont introduits et dispersés dans le milieu par malaxage dans un malaxeur à agitation lente du même type que ceux précédemment cités, de préférence dans celui ayant servi à l'émulsification.

Les dispersions faisant l'objet de l'invention peuvent en outre contenir d'autres additifs comme :
. des plastifiants comme par exemple les huiles polydiméthylsiloxanes de viscosité de l'ordre de 300 à 10.000 mPa.s., les dioctylphtalates, dialkylbenzènes éventuellement en émulsion aqueuse, selon des quantités de 0 à 70 parties en poids pour 100 parties en poids d'huile (A) ;
. des agents épaississants comme les polymères hydrosolubles de masse moléculaire supérieure à 10 000 g./mole, tels que par exemple les polyacrylates de métaux alcalins, les alcools polyvinyliques, les polyéthylènes glycols, les polyvinylpyrrolidones, les carraghénanes, les alginates, les méthylcelluloses, les hydroxyalkylcelluloses, la gomme xanthane en quantités pouvant aller jusqu'à 10 % en poids de la dispersion aqueuse finale ;
. des agents dispersants de charges comme par exemple les polyacrylates de métaux alcalins de masse moléculaire inférieure à 5 000, les phosphates minéraux en quantités pouvant aller jusqu'à 10 % en poids de la dispersion aqueuse finale.
Ces additifs peuvent être introduits soit dans la phase silicone avant sa mise en émulsion, soit à l'émulsion avant dilution.

Les différents constituants de la dispersion de l'invention sont présents en quantités telles que le taux d'extrait sec se situe dans l'intervalle indiqué ci-avant allant de 25 à 97 % en poids, et de préférence allant de 70 à 97 % ; le pH est ajusté entre 4 et 13 par ajout d'acides ou de bases organiques ou minérales (par exemple potasse, amines).

La dispersion finale obtenue est homogénéisée puis dégazée ; elle est ensuite conditionnée en emballage étanche à l'air et à la vapeur d'eau

Les dispersions faisant l'objet de l'invention peuvent être utilisées par exemple pour la confection de peintures élastomères, d'agents hydrofugeants de façades, de joints d'étancheité, de produits élastomères ignifuges.

Les exemples sont donnés à titre indicatif et ne peuvent être considérés comme une limite du domaine et de l'esprit de l'invention.

### Exemple 1

### Préparation de l'émulsion la phase silicone (F) consistant en l'huile hydroxylée (A)

On introduit dans un malaxeur à bras de type KUSTNER® (commercialisé par Kustner) de 5 litres
. 1.500 g d'huile α,ω-bis(hydroxy)polydimethylsiloxane de viscosité égale à 175 Pa.s. (huile 48 V 175000)
. puis 75 g de CEMULSOL NP 9® (nonylphénol contenant 9 motifs ethoxy commercialisé par Rhône-Poulenc) présentant un HLB de 12,8.
   Le milieu est agité pendant 15 minutes à 90 tours / minute .
   On coule alors lentement 100 g d'eau en 10 minutes environ sous la même agitation, puis on malaxe le milieu sous la même agitation pendant 150 minutes ; le rapport pondéral eau / eau + tensio-actif est de 0,57.

(la viscosité dynamique de ce mélange tensio-actif/eau est de 380 Pa.s. à un gradient de cisaillement de 1 s.⁻¹)

L'émulsion obtenue présente une granulométrie de 375 nm.

Elle est ensuite diluée avec 584 g d'eau afin d'obtenir un extrait sec de 70 % .

### Préparation de la dispersion aqueuse et d'un mastic à l'eau

On ajoute à 429 g. de l'émulsion diluée ainsi obtenue
. 6,6 g. d'une solution aqueuse à 50 % de potasse (KOH) et
. 1,56 g. d'une émulsion aqueuse à 38 % en poids de dilaurate de dioctylétain (stabilisée à l'alcool polyvinylique)

On homogéneise le mélange pendant 10 min à l'aide d'une turbine.

Après avoir transféré le mélange dans un malaxeur à bras MEILI® (commercialisé par Meili ) de 1,6 litre de capacité, ayant une vitesse de rotation de 50 tours/min, on ajoute 210 g. de carbonate de calcium précipité et enrobé (WINNOFIL SP® commercialisé par ICI) ; on malaxe pendant 30 min, puis on introduit 21 g d'une résine silicone DT ayant 2,2 % en poids de groupements hydroxyles, constituée de 70 % en poids de motifs CH₃ Si O_{1,5} et 30 % en poids de motifs (CH₃)₂ Si O et présentant une viscosité de 5 400 mPa.s.

La dispersion est homogeneisée par malaxage pendant 30 min ; elle est débullée sous vide et sous agitation pendant 10 min, puis conditionnée sous emballage étanche à la vapeur d'eau (cartouche en polyéthylène).

Son pH est voisin de 9,5.

Après 4 jours de stockage à 25°C, on étend à la râcle la dispersion, de façon à réaliser un film de 2 mm d'épaisseur, qu'on laisse sécher pendant 7 jours à température ambiante.

Sur les films séchés on mesure les propriétés mécaniques suivantes :
- dureté Shore A (DSA) selon la norme ASTM -D- 2240
- résistance à la rupture (R/R) selon la norme ASTM -D- 46 002 correspondant à la norme ASTM -D- 412, en MPa.
- allongement à la rupture (A/R) en % selon la norme AFNOR -T- 46 002
- module élastique (M100) à 100% d'allongement selon la norme AFNOR -T-46 002, en MPa

L'autoadhérence des dispersions aqueuses sur verre et béton est évaluée en déposant des cordons de 3 à 4 mm d'épaisseur et en laissant sécher les cordons sur ces supports pendant 15 jours ; l'adhérence est alors appréciée en tirant manuellement sur les cordons secs.

La stabilité de la dispersion aqueuse est évaluée en soumettant celle-ci dans son emballage étanche à un vieillissement thermique dans une étuve pendant 7 à 14 jours à 50 °C ; on retire un film de 2 mm. d'épaisseur, on le laisse sécher pendant 7 jours à température ambiante avant d'en recontrôler les propriétés mécaniques.

Les résultats obtenus sont rassemblés dans le tableau 1.

### Exemple 2

### Préparation de l'émulsion de la phase silicone (F) consistant en l'huile hydroxylée (A)

On répète l'opération de préparation de l'émulsion de l'huile (A) décrite à l'exemple1, à partir de
. 1500 g d'huile 48 V 175000
. 150 g de Cemulsol NP 9
. 150 g d'eau introduites en 10 min environ

On obtient après 90 minutes de malaxage à 90 tours / minute une émulsion stable de 380 nm.

Celle-ci est diluée à 75 % d'extrait sec par ajout de 555 g d'eau et remalaxage pendant 20 minutes.

### Préparation de la dispersion aqueuse et d'un mastic à l'eau

On répète l'opération de préparation du mastic à l'eau décrite à l'exemple 1, à partir de l'émulsion de l'huile (A) ci-dessus préparée.

Les propriétés du mastic obtenu figurent au tableau 1.

### Exemple 3

### Préparation de l'émulsion de la phase siicone (F) consistant en l'huile hydroxylée (A)

On introduit dans le malaxeur de l'exemple 1
. 1500 g d'huile 48 V 175000
. 37,5 g de CEMULSOL NP 5® (nonylphénol à 5 motifs éthoxy commercialisé par Rhône-Poulenc) de HLB = 10
. 112,5 g de CEMULSOL NP 12® (nonylphénol à 12 motifs éthoxy commercialisé par Rhône-Poulenc) de HLB = 14

Le mélange de tensio-actifs présente un HLB de 12 environ.

Après malaxage pendant 20 minutes à 90 tours/minute, on rajoute 100 g d'eau en 6 min environ ; on malaxe dans les mêmes conditions pendant 1 heure ; on rajoute 30 g d'eau supplémentaires en 2 min environ et on agite dans les mêmes conditions pendant 1 heure.

La granulométrie moyenne de l'émulsion obtenue est de 580 nm.

L'émulsion est amenée à un extrait sec de 75 % par dilution avec 470 g d'eau.

### Préparation de la dispersion aqueuse et d'un mastic à l'eau

On introduit dans le malaxeur à bras MEILI de 1,6 I.
. 471 g de l'émulsion diluée préparée
. 1,56 g d'une émulsion aqueuse à 37 % de dilaurate de dioctylétain stabilisée à l'alcool polyvinylique
et on malaxe pendant 30 min.

On ajoute 30 g d'α,ω-bis(triméthyl)polydiméthylsiloxane de viscosité égale à 100 mPa.s.

On malaxe pendant 15 min.

On introduit 21 g de la résine silicone DT mise en oeuvre à l'exemple 1; on malaxe pendant 20 min, puis on ajoute 10 g de solution aqueuse à 50 % de KOH. On homogéneise le mélange pendant 20 min sous pression atmosphérique et 5 min sous vide pour débuller le mastic avant conditionnement en cartouche.

Les propriétés du mastic obtenu figurent au tableau 1 .

### Exemple 4

### Préparation de l'émulsion de la phase silicone (F) consistant en l'huile hydroxylée (A)

Dans le malaxeur de l'exemple 1, on introduit
. 1 500 g d'huile 48 V 175000
. un mélange préalablement chauffé à 50 °C de :
. 45 g de GENAPOL X 050® (alcool gras éthoxylé commercialisé par Hoechst) de HLB = 10
. 45 g de GENAPOL UD 110® (alcool gras éthoxylé commercialisé par Hoechst) de HLB = 15

Le mélange de tensio-actif présente un HLB de 12,5 environ

Après malaxage pendant 20 minutes à 90 tours/minute, on introduit 105 g d'eau en 6 min environ.

On obtient par malaxage à 90 tours/minute une émulsion bipopulée constituée à 95 % en volume d'une première population de 785 nm de diamètre moyen et à 5% d'une deuxième population de 298 nm de diamètre.

L'extrait sec de l'émulsion finale est ajusté à 76 % par addition de 440 g d'eau et remalaxage à 90 tours/minute pendant 20 minutes.

### Préparation de la dispersion aqueuse et d'un mastic à l'eau

Dans le malaxeur à bras MEILI de 1,6 I, on introduit successivement
. 423 g de l'émulsion ci-dessus
. 1,56 g d'émulsion de dilaurate d'étain
. 210 g de carbonate de calcium SOCAL 312N® (commercialisé par SOLVAY)
. 21 g de la résine DT décrite à l'exemple 1
. 10 g de solution à 50 % de KOH
. et 6 g d'eau
en malaxant à chaque fois pendant 20 min après incorporation de chacun des constituants du mélange.

La dispersion finale est débullée sous vide pendant 5 min et conditionnée en emballage étanche.

Ses propriétés figurent au tableau 1.

### Exemple 5

### Préparation de l'huile méthoxyfonctionnelle (A)

On introduit dans le malaxeur de l'exemple 1
. 1500 g d'huile 48 V 175000
. 15 g de vinyltriméthoxysilane

Après 10 minutes d'agitation à 90 tours/min, on ajoute 7,95 g d'une solution méthanolique à 3,75 % de lithine (LiOH,H₂O) ; on agite pendant 25 minutes dans les mêmes conditions avant de neutraliser le mélange par ajout de 6 g du produit de réaction de l'acide phosphorique avec l'octaméthylcyclotetrasiloxane titrant 8,5 % de H₃ PO₄.

### Préparation de l'émulsion de la phase silicone (F) consistant en l'huile méthoxyfonctionnelle (A)

On ajoute à l'huile obtenue un mélange de
. 75 g de Cemulsol NP 5
. et de 75 g de Cemulsol NP 12
   Le milieu est malaxé à 90 tours/minute pendant 10 minutes ; on ajoute lentement 130 g d'eau en 8 min environ, puis on malaxe pendant 90 minutes à 90 tours/minute.
   On obtient une émulsion de 535 nm de granulométrie moyenne, que l'on dilue avec 420 g d'eau.

### Préparation de la dispersion aqueuse et d'un mastic à l'eau

On introduit dans le malaxeur à bras MEILI de 1,6 litres
. 447 g de l'émulsion de l'huile méthoxyfonctionnelle (A) ci-dessus préparée et
. 1,56 g d'émulsion aqueuse à 37 % de dilaurate de dioctylétain.

Après malaxage pendant 15 min, on incorpore 150 g de carbonate SOCAL 312N ; on malaxe à nouveau pendant 45 min, on désaère sous vide et conditionne le mélange en cartouche étanche.

Les propriétés du mastic figurent au tableau 1.

### Exemples 6 à 9

On reproduit l'exemple 5 en ajoutant à la dispersion aqueuse 3 g respectivement des silanes aminés suivants :
- le N-méthyl-3aminopropyltriméthoxysilane
- le N-aminoéthyl-3-aminopropyltriméthoxysilane
- le 3-aminopropyltriéthoxysilane
- le N-aminoéthyl-3-aminopropylméthyldiméthoxysilane

Les propriétés des mélanges stockés en cartouche figurent au tableau 2.

### Exemple 10

### Préparation de l'huile méthoxyfonctionnelle (A)

On répète l'opération décrite à l'exemple 5 en mettant en oeuvre 45 g de vinyltriméthoxysilane au lieu de 15 g.

### Préparation de l'émulsion de la phase silicone (F) consistant en l'huile méthoxyfonctionnelle (A)

On ajoute à l'huile obtenue, 150 g de CEMULSOL NP 7® (nonylphénol à 7 motifs éthoxy commercialisé par Rhône-Poulenc) de HLB = 11,7.

On malaxe pendant 5 minutes environ à 90 tours/minutes, puis on ajoute 160 g d'eau en 10 min environ et malaxe pendant 90 minutes à 90 tours/minute.

L'émulsion obtenue a une granulométrie moyenne de 1670 nm ; elle est ensuite diluée par addition de 390 g d'eau.

### Préparation de la dispersion et d'un mastic à l'eau

On introduit dans le malaxeur MEILI de 1,6 I.
. 465 g de l'émulsion ci-dessus préparée
. 1,56 g d'émulsion de dilaurate de dioctylétain

Après agitation pendant 15 min, on incorpore 150 g de carbonate SOCAL 312N et on malaxe pendant 30 min.

On ajoute 3 g de N-méthyl-3-aminopropyltriméthoxysilane ; on agite pendant 30 min avant de mettre sous vide et de conditionner en cartouche.

Les propriétés du mélange obtenu figurent au tableau 3.

### Exemple 11

### Préparation de l'émulsion de phase silicone (F)

On introduit dans le malaxeur de l'exemple 1
. 1525 g d'huile 48 V 175000
. 15 g de N-méthyl-3-aminopropyl-trimethoxysilane

Le mélange est malaxé pendant 20 minutes à 90 tours/minute, puis mis sous vide léger pendant 5 minutes.

On ajoute un prémélange de :
. 70 g de Cemulsol NP 5 et de
. 70 g de Cemulsol NP 9
   Le mélange de tensio-actifs présente un HLB de 11,4.
   On malaxe pendant 10 minutes à 90 tours/minute, puis on introduit 120 g d'eau en 7 min environ sous agitation ; le mélange est malaxé pendant 45 minutes à 90 tours/minute.
   L'émulsion obtenue présente une granulométrie moyenne de 2400 nm.
   On rajoute 30 g d'eau en 3 min environ et on continue à malaxer dans les mêmes conditions pendant 90 minutes ; la granulométrie est alors de 1790 nm.
   L'émulsion est diluée avec 400 g d'eau pour avoir un extrait sec de 74 %.

### Préparation de la dispersion et d'un mastic à l'eau

On introduit dans le malaxeur à bras MEILI de 1,6 I.
. 405 g de l'émulsion ci-dessus préparée et
. 1,56 g d'émulsion de dilaurate de dioctylétain

On malaxe pendant 15 min.

On incorpore 150 g de carbonate SOCAL 312N, on malaxe pendant 30 min, désaère sous vide et conditionne le mélange en cartouche.

Les propriérés du mélange figurent au tableau 3.

### Exemple 12

### Préparation de l'huile méthoxyfonctionnelle (A)

On introduit dans le malaxeur de l'exemple 1
. 1500 g d'huile 48 V 175000
. 45 g de vinyltriméthoxysilane
   Après 5 minutes d'agitation à 90 tours/min, on ajoute 12 g d'une solution méthanolique à 3,75 % de lithine ; on agite pendant 20 minutes à 90 tours/min, puis on neutralise le mélange par 9 g du produit de réaction de l'acide phosphorique avec l'octaméthyltétracyclosiloxane titrant à 8,5 % de H₃PO₄.
   Après 15 minutes d'agitation dans les mêmes conditions, on désaère sous vide pendant 15 minutes.

### Préparation de l'émulsion de la phase silicone (F) consistant en l'huile méthoxyfonctionnelle (A).

On ajoute à l'huile ainsi obtenue un mélange de
. 75 g de Cemulsol NP 5 et de
. 75 g de Cemulsol NP 12

On agite pendant 5 minutes à 90 tours/min, puis on introduit 130 g d'eau en 8 min environ.

Après 90 minutes de malaxage à 90 tours/minute, on obtient une émulsion de granulométrie moyenne de 630 nm.

Elle est ensuite diluée par ajout de 420 g d'eau.

### Préparation de la dispersion et d'un mastic à l'eau

On introduit dans le malaxeur MEILI de 1,6 I.
. 453 g de l'émulsion ci-dessus préparée et
. 1,56 g d'émulsion de dilaurate de dioctylétain

On agite pendant 15 min, puis on introduit 150 g de carbonate SOCAL 312N ; on malaxe pendant 30 min.

On ajoute alors 6 g de N-méthyl-3-aminopropyltriméthoxysilane ; on malaxe pendant 30 min, désaère sous vide et conditionne le mélange en cartouche.

Les propriétés du mélange figurent au tableau 3

Le pH de la dispersion est égal à 8.

### Exemple 13

### Préparation de l'émulsion de la phase silicone (F)

On introduit dans le malaxeur de l'exemple 1
. 1500 g d'huile 48 V 175000
. 3 g de dilaurate de dioctylétain dispersé dans 30 g d'huile α,ω-bis(triméthyl)polydiméthylsiloxane de viscosité égale à 50 mPa.s.

Le mélange est malaxé pendant 15 minutes à 90 tours/min.

On ajoute 150 g de CEMULSOL NP 9 et on agite pendant 15 minutes à 90 tours/min.

On coule alors lentement 120 g d'eau en 10 minutes environ sous la même agitation, puis on malaxe le mélange sous la même agitation pendant 150 minutes.

L'émulsion obtenue présente une granulométrie de 410 nm..

Celle-ci est ensuite diluée avec 430 g d'eau afin d'obtenir un extrait sec de 75 %.

### Préparation de la dispersion et d'un mastic à l'eau

On introduit successivement dans le malaxeur à bras MEILI de 1,6 I.
. 471 g de l'émulsion ci-dessus préparée
. 210 g de carbonate de calcium WINNOFIL® SP ( commercialisé par ICI)
. 21 g de résine silicone DT décrite à l'exemple 1
. 10 g de solution à 50 % de KOH
en malaxant à chaque fois pendant 30 minutes après incorporation de chacun des constituants du mélange.

La dispersion finale est débullée sous vide pendant 5 minutes et conditionnée en emballage étanche.

Ses propriétés figurent au tableau 3.

### Exemple 14

### Préparation de l'émulsion de phase silicone (F)

On introduit dans le malaxeur de l'exemple 1
. 1500 d'huile 48 V 175000
. 45 g de silice de précipitation FK 160® commercialisée par DEGUSSA

Le mélange est malaxé pendant 20 minutes à 70 tours/min.

On ajoute
. 75 g de CEMULSOL NP 5
. 75 g de CEMULSOL NP 12

Le mélange est malaxé pendant 15 minutes à 70 tours/min.

On coule alors lentement 150 g d'eau en 10 minutes sous une agitation de 90 tours/min, puis on malaxe pendant 150 minutes sous la même agitation.

L'émulsion obtenue a une granulométrie de 440 nm.

Celle-ci est ensuite diluée avec 400 g d'eau ; on obtient un extrait sec de 76,2 %.

### Préparation de la dispersion et du mastic à l'eau

On introduit successivement dans le malaxeur à bras MEILI de 1,6 I.
. 447 g de l'émulsion ci-dessus préparée
. 1,56 g d'une émulsion aqueuse à 37 % de dilaurate de dioctylétain stabilisée à l'alcool polyvinylique
. 150 g de carbonate de calcium WINNOFIL SP
. 21 g de Résine silicone DT décrite à l'exemple 1
. 10 g de solution à 50 % de KOH
en malaxant pendant 30 minutes après chaque incorporation de constituant.

La dispersion finale est débullée sous vide pendant 5 minutes et conditionnée en emballage étanche. Ses propriétés figurent au tableau 3.

**TABLEAU 1**

| **exemple** | **1** | **2** | **3** | **4** |
|---|---|---|---|---|
| **propriétés** | | | | |
| DSA | 30 | 20 | 16 | 16 |
| R/R | 1,25 | 1,23 | 1,27 | 0,53 |
| A/R | 700 | 770 | 930 | 176 |
| M100 | 0,45 | 0,36 | 0,30 | 0,31 |
| **adhérence** | | | | |
| sur verre | moyenne | bonne | excellente | moyenne |
| sur béton | moyenne | moyenne | excellente | moyenne |
| **propriétés après 14 j. à 50°C** | | | **après 7 j. à 50 °C** | |
| DSA | 24 | 16 | 15 | - |
| R/R | 0,91 | 0,72 | 0,80 | - |
| A/R | 663 | 724 | 800 | - |
| M100 | 0,36 | 0,27 | 0,28- | |

**TABLEAU 2**

| **exemple** | **5** | **6** | **7** | **8** | **9** |
|---|---|---|---|---|---|
| **propriétés** | | | | | |
| DSA | 8 | 15 | 15 | 15 | 21 |
| R/R | 0,76 | 0,89 | 1,21 | 0,96 | 1,33 |
| A/R | 706 | 770 | 564 | 630 | 733 |
| M100 | 0,16 | 0,25 | 0,28 | 0,27 | 0,34 |
| **adhérence** | | | | | |
| sur verre | moyenne | bonne | excellente | moyenne | moyenne |
| sur béton | moyenne | excellente | excellente | excellente | bonne |
| **propriétés après 14j. à 50 °C** | | | | | |
| DSA | 3 | 7,5 | 8,5 | 7,5 | - |
| R/R | 0,70 | 0,64 | 1,07 | 0,87 | - |
| A/R | 823 | 722 | 800 | 767 | - |
| M100 | 0,10 | 0,18 | 0,22 | 0,18 | - |

**TABLEAU 3**

| **exemple** | **10** | **11** | **12** | **13** | **14** |
|---|---|---|---|---|---|
| **propriétés** | | | | | |
| DSA | 17 | 16 | 20 | 20 | 25 |
| R/R | 0,62 | 0,7 | 1,06 | 1,2 | 1,38 |
| A/R | 610 | 700 | 710 | 880 | 670 |
| M100 | 0,28 | 0,26 | 0,33 | 0,34 | 0,51 |
| **adhérence** | | | | | |
| sur verre | - | bonne | - | excellente | excellente |
| sur béton | - | excellente | - | excellente | excellente |
| **propriétés après 14 j. à 50 °C** | | | | | |
| DSA | - | 11 | 20 | 17 | - |
| R/R | - | 0,54 | 0,99 | 0,50 | - |
| A/R | - | 600 | 440 | 620 | - |
| M100 | - | 0,21 | 0,39 | 0,26 | - |

## Revendications

1. Dispersions aqueuses d'huiles silicones comprenant :
- au moins une huile organopolysiloxane (A) susceptible de réticuler par condensation, si nécessaire en présence d'un agent de réticulation (B), en un élastomère ;
- si nécessaire, pour 100 parties en poids d'huile(s) (A), de 0,1 à 100 parties en poids d'au moins un agent de réticulation (B) ;
- éventuellement, pour 100 parties en poids d'huile(s) (A), jusqu'à 50 parties en poids d'au moins un silane (C) ;
- jusqu'à 300 parties en poids d'une charge minérale siliceuse et/ou non siliceuse (D), pour 100 parties en poids d'huile(s) (A) ;
- une quantité catalytiquement efficace d'un composé catalytique de durcissement (E) pouvant aller jusqu'à 3 parties en poids pour 100 parties d'huile (A) ; lesdites dispersions étant **caractérisées en ce qu'** elles sont obtenues par un procédé comprenant les étapes suivantes :
→ 1) mise en émulsion d'une phase silicone réalisée par malaxage d'un mélange constitué de :
. 100 parties en poids d'une phase silicone (F) de viscosité dynamique à 25 °C de l'ordre de 50 à 1000 Pa.s., phase silicone comprenant l'huile ou mélange d'huiles (A) et éventuellement au moins un des constituants (B), (C), (D) ou (E) ;
. 3-20 parties en poids d'au moins un agent tensio-actif (G) de nature non-ionique, le HLB dudit agent tensio-actif ou du mélange d'agents tensio-actifs étant d'au moins 10 ;
. 2-20 parties en poids d'eau ;
• le rapport pondéral eau / eau+agent(s) tensio-actif(s) étant tel que la viscosité du mélange eau + agent(s) tensio-actif(s) soit voisine de ou supérieure à celle de la phase silicone (F) et se situant dans l'intervalle allant de 20/100 à 70/100 ;
• l'opération de malaxage étant réalisée dans un malaxeur muni d'un agitateur, agitateur dont la portée mobile ne tourne pas à plus de 500 tours/min, avec une vitesse tangentielle en extrémité de partie mobile ne dépassant pas 2,5 m/s et avec un rapport vitesse tangentielle en extrémité de partie mobile / distance entre l'extrémité de la partie mobile et la paroi du malaxeur qui est inférieure à 2500 s⁻¹, pendant une durée suffisante pour obtenir une émulsion "huile dans eau" de granulométrie de l'ordre de 0,1 à 5 micromètres ;
→ 2) dilution éventuelle avec de l'eau jusqu'à obtenir un extrait sec de 25 à 97 % ; puis
→ 3) addition du ou des constituant(s) non présent(s) dans la phase silicone (F), qui sont dispersés dans le milieu par malaxage.

2. Dispersions aqueuses d'huilés silicones selon la revendication 1, comprenant :
- au moins une huile organopolysiloxane (A) susceptible de réticuler par condensation, si nécessaire en présence d'un agent de réticulation (B), en un élastomère ;
- si nécessaire, pour 100 parties en poids d'huile(s) (A), de 0,5 à 30 parties en poids d'au moins un agent de réticulation (B) ;
- éventuellement, pour 100 parties en poids d'huile(s) (A), jusqu'à 10 parties en poids d'au moins un silane (C) ;
- de 3 à 100 parties en poids d'une charge minérale siliceuse et/ou non siliceuse (D), pour 100 parties en poids d'huile(s) (A) ;
- une quantité catalytiquement efficace d'un composé catalytique de durcissement (E) pouvant aller jusqu'à 3 parties en poids pour 100 parties d'huile (A) ; lesdites dispersions étant **caractérisées en ce qu'** elles sont obtenues par un procédé comprenant les étapes suivantes :
→ 1) mise en émulsion d'une phase silicone, réalisée par malaxage d'un mélange constitué de :
. 100 parties en poids d'une phase silicone (F) de viscosité dynamique à 25 °C de l'ordre de 50 à 1.000 Pa.s., phase silicone comprenant l'huile ou mélange d'huiles (A) et éventuellement au moins un des constituants (B), (C), (D) ou (E) ;
. 5-15 parties en poids d'au moins un agent tensio-actif (G) non-ionique, le HLB dudit agent tensio-actif ou du mélange d'agents tensio-actifs étant compris entre 10 et 15 ;
. 3-15 parties en poids d'eau ;
• le rapport pondéral eau / eau+agent(s) tensio-actif(s) étant tel que la viscosité du mélange eau + agent(s) tensio-actif(s) soit voisine de ou supérieure à celle de la phase silicone (F) et se situant dans l'intervalle allant de 20/100 à 70/100 ;
• l'opération de malaxage étant réalisée dans un malaxeur muni d'un agitateur, agitateur dont la portée mobile ne tourne pas à plus de 500 tours/min, avec une vitesse tangentielle en extrémité de partie mobile ne dépassant pas 2,5 m/s et avec un rapport vitesse tangentielle en extrémité de partie mobile / distance entre l'extrémité de la partie mobile et la paroi du malaxeur qui est inférieure à 2500 s⁻¹, pendant une durée suffisante pour obtenir une émulsion "huile dans eau" de granulométrie de l'ordre de 0,2 à 2 micromètres ;
→ 2) dilution éventuelle avec de l'eau jusqu'à obtenir un extrait sec supérieur à 70 % ; puis
→ 3) addition du ou des constituant(s) non présent(s) dans la phase silicone (F), qui sont dispersés dans le milieu par malaxage.

3. Dispersions aqueuses selon la revendication 1 ou 2 **caractérisées en ce que** les huiles (A) sont des huiles α,ω-hydroxylées ou des huiles fonctionnelles comportant par molécule au moins 2 groupes fonctionnels condensables éventuellement après hydrolyse.

4. Dispersions aqueuses selon l'une quelconque des revendications 1 à 3, **caractérisées en ce que** les huiles (A) ont pour formule générique (I) 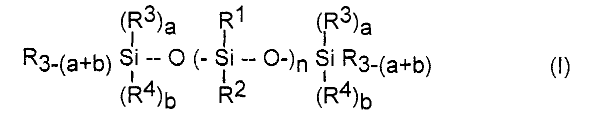 formule dans laquelle
- a est 0 ou 1
- b est 0 ou 1
- avec a+b = 0 ; 1 ou 2
- n a une valeur suffisante pour conférer au polymère de formule (a) la viscosité désirée
- les radicaux R sont identiques ou différents et représentent
. un groupe OH avec a+b = 2 ;
. un groupe alcoxy ou alcényloxy contenant de 1 à 10 atomes de carbone ;
. un groupe aryloxy contenant de 6 à 13 atomes de carbone ;
. un groupe acyloxy contenant de 1 à 13 atomes de carbone ;
. un groupe cétiminoxy contenant de 1 à 8 atomes de carbone ;
. un groupe amino- ou amido-fonctionnel contenant de 1 à 6 atomes de carbone, liés au silicium par une liaison Si-N ;
- les radicaux R¹ et R² sont identiques ou différents et représentent des groupes organiques aliphatiques alkyle, alcényle, ayant de 1 à 10 atomes de carbone, aromatiques phenyle, lesdits groupes étant éventuellement substitués par des atomes d'halogènes ou des groupes cyano ;
- les radicaux R³et R⁴ sont identiques ou différents et représentent des groupes organiques aliphatiques alkyle, aminoalkyle, polyaminoalkyle, époxyalkyle, alcényle, contenant de 1 à 13 atomes de carbone, aromatiques aryle contenant de 6 à 13 atomes de carbone ;
au moins 2 groupes fonctionnels condensables éventuellement après hydrolyse étant présents par molécule.

5. Dispersions selon la revendication 4, **caractérisées en ce qu'**au moins 80 % des radicaux R1 à R4 représentant un groupe méthyle.

6. Dispersions aqueuses selon l'une quelconque des revendications 1 à 5, **caractérisées en ce que** l'agent de réticulation (B) est de silice colloïdale, du silicate de soude, de la silice de pyrogénation ou de précipitation, un organosiliconate de métal alcalin, une microémulsion de résine silsesquioxane, une résine silicone réactive de faible masse moléculaire présentant des groupes alcoxy et acyloxy, une résine silicone de haute masse insoluble dans le toluène , une résine silicone hydroxylée , un alcoxysilane, un alkylaminosilane, un alkylamidosilane.

7. Dispersions aqueuses selon l'une quelconque des revendications 1 à 6, **caractérisées en ce que** le silane (C) est un sous-produit de synthèse des huiles (A) et a pour formule
(R⁵)_{c} Si (R)_{4-c}
formulé dans laquelle
- c est 0 ;1 ou 2
- les radicaux R⁵, identiques ou différents, correspondent aux radicaux R3 et R4 de l'huile (A) de formule (I)
- le radical R correspond au radical organique R de l'huile polyorganosiloxane (A) de formule (I)
ledit silane étant présent selon des quantités de l'ordre de 0 à 10 parties en poids pour 100 parties d'huile(s) (A).

8. Dispersions aqueuses selon l'une quelconque des revendications 1 à 6, **caractérisées en ce que** le silane (C) est un additif modulateur d'adhérence tel que l'aminopropyltriéthoxysilane, l'aminopropylméthyldiéthoxysilane, le glycidoxypropyltriméthoxysilane, présent selon des quantités pouvant aller jusqu'à 50 % du poids d'huile(s) (A).

9. Dispersions aqueuses selon l'une quelconque des revendications 1 à 8, **caractérisées en ce que** les charges (D) sont renforçantes ou semi-renforçantes de granulométrie de l'ordre de 0,001 à 300 µm.

10. Dispersions aqueuses selon l'une quelconque des revendications 1 à 9, **caractérisées en ce que** le composé catalytique de durcissement (E) est un dérivé de l'étain, mis en oeuvre selon des quantités pouvant aller de 0,05 à 1 partie en poids pour 100 parties d'huile (A).

11. Dispersions aqueuses selon l'une quelconque des revendications 1 à 10, **caractérisées en ce que** la phase silicone (F) consiste en :
. (F1) une huile (A) de viscosité de l'ordre de 50 à 1.000 Pa.s,
. (F2) un mélange d'huiles (A), mélange de viscosité de l'ordre de 50 à 1.000 Pa.s,
. (F3) un mélange d'au moins une huile (A) et d'au moins un agent réticulant (B) si celui-ci est nécessaire et/ou un silane (C) et/ou au moins une charge (D), mélange de viscosité de l'ordre de 50 à 1.000 Pa.s,
. ou (F4) un mélange d'au moins une huile (A) et du composé catalytique (E), en présence éventuellement d'au moins un silane (C) et/ou d'au moins une charge (D).

12. Dispersions aqueuses selon l'une quelconque des revendications 1 à 11, **caractérisées en ce que** la mise en émulsion "huile dans eau" de la phase silicone (F) est réalisée par introduction de la phase silicone (F) dans un mélange eau + agent(s) tensio-actif(s) (G) ou par introduction de l'eau dans un mélange phase silicone (F) + agent(s) tensio-actif(s) (G) et malaxage à une température de l'ordre de 10 à 50°C.

13. Dispersions aqueuses selon l'une quelconque des revendications 1 à 12, **caractérisées en ce que**, après dilution éventuelle du milieu, les constituants desdites dispersions non présents dans l'émulsion "huile dans eau" de la phase silicone (F), à savoir :
. dans le cas de l'émulsion de la phase silicone (F1), (F2) ou (F3), le composé catalytique et les autres constituants éventuels non présents dans ladite phase ;
. dans le cas de l'émulsion de la phase silicone (F4), l'agent de réticulation (B) si celui-ci est nécessaire ainsi que les autres constituants éventuels non présents dans ladite phase ;
sont introduits et dispersés dans le milieu par malaxage dans le malaxeur ayant servi à l'émulsification.

14. Dispersions aqueuses selon la revendication 12 ou 13, **caractérisées en ce que** l'opération de malaxage est réalisée dans une extrudeuse à vis simple ou multiple(s), un malaxeur planétaire, un malaxeur à crochet, un disperseur lent, un malaxeur statique, un malaxeur à pale, à hélice, à bras, à ancre.

15. Dispersions aqueuses selon l'une quelconque des revendications 1 à 14, **caractérisées en ce qu'**elles contiennent en outre des plastifiants, des agents épaississants, des agents dispersants de charges.

16. Utilisation des dispersions aqueuses faisant l'objet de l'une quelconque des revendications précédentes pour la confection de peintures élastomères, d'agents hydrofugeants de façades, de joints d'étancheité, de produits élastomères ignifuges.

## Patentansprüche

1. Wäßrige Silikonöldispersionen umfassend:
- mindestens ein Organopolysiloxanöl (A), das in der Lage ist, durch Kondensation, falls notwendig, in Gegenwart eines Vernetzungsmittels (B) zu einem Elastomeren zu vernetzen;
- falls notwendig, auf 100 Gewichtsteile Öl/Öle (A) 0,1 bis 100 Gewichtsteile mindestens eines Vernetzungsmittels (B);
- gegebenenfalls auf 100 Gewichtsteile Öl/Öle (A) bis zu 50 Gewichtsteile mindestens eines Silans (C);
- bis zu 300 Gewichtsteile eines siliciumhaltigen und/oder nicht-siliciumhaltigen mineralischen Füllstoffs (D) auf 100 Gewichtsteile Öl/öle (A);
- eine katalytisch wirksame Menge einer katalytischen Härtungsverbindung (E), die bis zu 3 Gewichtsteile auf 100 Gewichtsteile Öl (A) gehen kann;
wobei diese Dispersionen **dadurch gekennzeichnet sind, dass** sie erhalten worden sind durch ein Verfahren, das die folgenden Stufen umfasst:
→ 1) Emulgieren einer Silikonphase, hergestellt durch Verkneten eines Gemisches aus:
. 100 Gewichtsteilen einer Silikonphase (F) der dynamischen Viskosität bei 25°C im Bereich von 50 bis 1.000 Pas, wobei die Silikonphase das Öl oder ein Gemisch von Ölen (A) und gegebenenfalls mindestens einen der Bestandteile (B), (C), (D) oder (E) umfasst;
. 3 bis 20 Gewichtsteilen mindestens eines oberflächenaktiven Mittels (G) von nichtionischer Natur, wobei der HLB-Wert dieses oberflächenaktiven Mittels oder des Gemisches der oberflächenaktiven Mittel mindestens 10 beträgt;
. 2 bis 20 Gewichtsteilen Wasser:
. wobei das Gewichtsverhältnis Wasser/Wasser + oberflächenaktives Mittel/oberflächenaktive Mittel derart ist, dass die Viskosität des Gemisches Wasser + oberflächenaktives Mittel bzw. oberflächenaktive Mittel nahe bei oder größer als die der Silikonphase (F) ist und in einem Intervall von 20/100 bis 70/100 liegt;
. der Arbeitsschritt des Verknetens in einem Kneter mit einem Rührer durchgeführt wird, wobei der mobile Teil des Rührers sich mit höchstens 500 UpM bewegt, bei einer tangentiellen Geschwindigkeit am Ende des mobilen Teils von nicht mehr als 2,5 m/s und bei einem Verhältnis tangentielle Geschwindigkeit am Ende des mobilen Teils /Entfernung zwischen dem Ende des mobilen Teils und der Wand des Kneters von kleiner als 2500 s⁻¹, während einer Dauer, die ausreicht, um eine "Öl-in-Wasser"-Emulsion einer Körnung in der Größenordnung von 0,1 bis 5 um zu erhalten;
→ 2) gegebenenfalls Verdünnen mit Wasser bis ein Trockenextrakt von 25 bis 97 % erhalten wird, dann
→ 3) Zusatz des oder der Bestandteils/Bestandteile, der/die nicht in der Silikonphase (F) enthalten ist bzw. sind, die in dem Medium durch Verkneten dispergiert werden.

2. Wäßrige Silikonöldispersionen nach Anspruch 1 umfassend:
- mindestens ein Organopolysiloxanöl (A), das in der Lage ist, durch Kondensation, falls notwendig, in Gegenwart eines Vernetzungsmittels (B) zu einem Elastomeren zu vernetzen;
- falls notwendig, auf 100 Gewichtsteile Öl/Öle (A) 0,5 bis 30 Gewichtsteile mindestens eines Vernetzungsmittels (B);
- gegebenenfalls auf 100 Gewichtsteile Öl/Öle (A) bis zu 10 Gewichtsteile mindestens eines Silans (C);
- 3 bis zu 100 Gewichtsteile eines siliciumhaltigen und/oder nicht-siliciumhaltigen mineralischen Füllstoffs (D) auf 100 Gewichtsteile Öl/Öle (A);
- eine katalytisch wirksame Menge einer katalytischen Härtungsverbindung (E), die bis zu 3 Gewichtsteile auf 100 Gewichtsteile Öl (A) gehen kann;
wobei diese Dispersionen **dadurch gekennzeichnet sind, dass** sie erhalten worden sind durch ein Verfahren, das die folgenden Stufen umfasst:
→ 1) Emulgieren einer Silikonphase, hergestellt durch Verkneten eines Gemisches aus:
. 100 Gewichtsteilen einer Silikonphase (F) der dynamischen Viskosität bei 25°C im Bereich von 50 bis 1.00.0 Pas, wobei die Silikonphase das Öl oder ein Gemisch von Ölen (A) und gegebenenfalls mindestens einen der Bestandteile (B). (C), (D) oder (E) umfaßt;
. 5 bis 15 Gewichtsteilen mindestens eines oberflächenaktiven nichtionischen Mittels (G), wobei der HLB-Wert dieses oberflächenaktiven Mittels oder des Gemisches der oberflächenaktiven Mittel 10 bis 15 beträgt;
. 3 bis 15 Gewichtsteilen Wasser:
. wobei das Gewichtsverhältnis Wasser/Wasser + oberflächenaktives Mittel/oberflächenaktive Mittel derart ist, dass die Viskosität des Gemisches Wasser + oberflächenaktives Mittel bzw. oberflächenaktive Mittel nahe bei der oder größer als die der Silikonphase (F) ist und in einem Intervall von 20/100 bis 70/100 liegt;
. der Arbeitsschritt des Verknetens in einem Kneter mit einem Rührer durchgeführt wird, wobei der mobile Teil des Rührers sich mit höchstens 500 UpM bewegt, bei einer tangentiellen Geschwindigkeit am Ende des mobilen Teils von nicht mehr als 2.5 m/s und bei einem Verhältnis tangentielle Geschwindigkeit am Ende des mobilen Teils /Entfernung zwischen dem Ende des mobilen Teils und der Wand des Kneters von kleiner als 2500 s⁻¹, während einer Dauer, die ausreicht, um eine "Öl-in-Wasser"-Emulsion einer Körnung in der Größenordnung von 0,2 bis 2 µm zu erhalten;
→ 2) gegebenenfalls Verdünnen mit Wasser bis ein Trockenextrakt von mehr als 70 % erhalten wird, dann
→ 3) Zusatz des oder der Bestandteils/Bestandteile, der/die nicht in der Silikonphase (F) enthalten ist bzw. sind, die in dem Medium durch Verkneten dispergiert werden.

3. Wäßrige Dispersionen nach Anspruch 1 oder 2, **dadurch gekennzeichnet, dass** die Öle (A) α,ω-hydroxylierte Öle oder funktionelle Öle sind, enthaltend pro Molekül mindestens 2 funktionelle Gruppen, kondensierbar gegebenenfalls nach Hydrolyse.

4. Wäßrige Dispersionen nach einem der Ansprüche 1 bis 3, **dadurch gekennzeichnet, dass** die Öle (A) die allgemeine Formel (I) besitzen 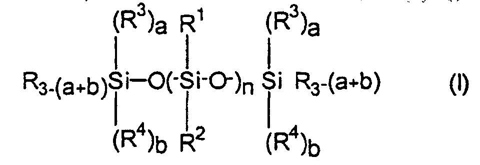 worin
- a 0 oder 1 ist
- b 0 oder 1 ist
- mit a + b = 0; 1 oder 2
- n einen ausreichenden Wert besitzt, um den Polymeren der Formel (a) die gewünschte Viskosität zu verleihen
- die Reste R identisch oder verschieden sind und bedeuten
. eine OH-Gruppe mit a + b = 2;
. einen Alkoxy- oder Alkenyloxyrest mit 1 bis 10 Kohlenstoffatomen;
. einen Aryloxyrest mit 6 bis 13 Kohlenstoffatomen;
. einen Acyloxyrest mit 1 bis 13 Kohlenstoffatomen;
. eine Ketiminoxygruppe mit 1 bis 8 Kohlenstoffatomen;
. eine funktionelle Amino- oder Amidogruppe mit 1 bis 6 Kohlenstoffatomen, die an das Silicium durch eine Si-N-Bindung gebunden sind;
- die Reste R¹ und R² gleich oder verschieden sind und organische aliphatische Alkyl-, Alkenylreste mit 1 bis 10 Kohlenstoffatomen, aromatische Phenylreste bedeuten, wobei diese Reste gegebenenfalls durch Halogenatome oder Cyanogruppen substituiert sind;
- die Reste R³ und R⁴ gleich oder verschieden sind und organische aliphatische Alkyl-, Aminoalkyl-, Polyaminoalkyl-, Epoxyalkyl-, Alkenylreste mit 1 bis 13 Kohlenstoffatomen, aromatische Arylreste mit 6 bis 13 Kohlenstoffatomen bedeuten;
wobei mindestens 2 gegebenenfalls nach Hydrolyse kondensierbare funktionelle Gruppen pro Molekül vorhanden sind.

5. Dispersionen nach Anspruch 4, **dadurch gekennzeichnet, dass** mindestens 80 % der Reste R¹ bis R⁴ eine Methylgruppe bedeuten.

6. Wäßrige Dispersionen nach einem der Ansprüche 1 bis 5, **dadurch gekennzeichnet, dass** das Vernetzungsmittel (B) kolloidale Kieselsäure, Natriumsilicat, pyrogene oder gefällte Kieselsäure, Alkalimetallorganosilikat, eine Mikroemulsion eines Silsesquioxanharzes, ein reaktives Silikonharz mit geringem Molekulargewicht mit Alcoxy- und Acyloxygruppen, ein Silikonharz mit hohem Molekulargewicht, das in Toluol unlöslich ist, ein hydroxyliertes Silikonharz, ein Alcoxysilan, ein Alkylaminosilan, ein Alkylamidosilan ist.

7. Wäßrige Dispersionen nach einem der Ansprüche 1 bis 6, **dadurch gekennzeichnet, dass** das Silan (C) ein Synthesenebenprodukt der Öle (A) ist und die Formel
(R⁵)_{c}Si (R)_{4-c}
hat, worin 1
- c 0, 1 oder 2 ist,
- die Reste R⁵, die identisch oder verschieden sind, den Resten R3 und R4 des Öls (A) der Formel (I) entsprechen,
- der Rest R dem organischen Rest R des Polyorganosiloxans (A) der Formel (I) entspricht,
wobei das Silan gemäß den Mengen der Größenordnung 0 bis 10 Gewichtsteile auf 100 Teile Öl/Öle (A) vorhanden ist.

8. Wäßrige Dispersionen nach einem der Ansprüche 1 bis 5. **dadurch gekennzeichnet, dass** das Silan (C) ein Zusatz-Haftmodulator ist, wie Aminopropyltriethoxysilan, Aminopropylmethyldiethoxysilan, Glycidoxypropyltrimethoxysilan, vorhanden gemäß den Mengen, die bis zu 50 Gew.-% des Öls bzw. der Öle gehen können.

9. Wäßrige Dispersionen nach einem der Ansprüche 1 bis 8, **dadurch gekennzeichnet, dass** die Füllstoffe (D) verstärkend oder semiverstärkend mit einer Körnung in der Größenordnung von 0,001 bis 300 µm sind.

10. Wäßrige Dispersionen nach einem der Ansprüche 1 bis 9, **dadurch gekennzeichnet, dass** die katalytische Härtungsverbindung (E) ein Zinnderivat ist, eingesetzt gemäß Mengen, die von 0,05 bis 1 Gewichtsteil pro 100 Teile Öl (A) gehen können.

11. Wäßrige Dispersionen nach einem der Ansprüche 1 bis 10, **dadurch gekennzeichnet, dass** die Silikonphase (F) besteht aus:
. (F1) einem Öl (A) der Viskosität im Bereich von 50 bis 1000 Pas;
. (F2) einem Gemisch aus Ölen (A), Gemisch mit der Viskosität im Bereich von 50 bis 1000 Pas;
. (F3) einem Gemisch von mindestens einem Öl (A) und mindestens einem Vernetzungsmittel (B), sofern dieses notwendig ist, und/oder einem Silan (C) und/oder mindestens einem Füllstoff (D), Gemisch der Viskosität im Bereich von 50 bis 1000 Pas;
. oder (F4) einem Gemisch mindestens eines Öls (A) und der katalytischen Verbindung (E), gegebenenfalls in Gegenwart mindestens eines Silans (C) und/oder mindestens eines Füllstoffs (D).

12. Wäßrige Dispersionen nach einem der Ansprüche 1 bis 11, **dadurch gekennzeichnet, dass** die Emulgierung zu "Öl-in-Wasser" der Silikonphase (F) durchgeführt wird durch Einführen der Silikonphase (F) in ein Gemisch Wasser plus oberflächenaktive(s) Mittel (G) oder durch Einführen des Wassers in ein Gemisch Silikonphase (F) plus oberflächenaktive(s) Mittel (G) und Verkneten bei einer Temperatur im Bereich von 10 bis 50 °C.

13. Wäßrige Dispersionen nach einem der Ansprüche 1 bis 12, **dadurch gekennzeichnet, dass** nach eventueller Verdünnung des Mediums die in der "Öl-in-Wasser"-Emulsion der Silikonphase (F) nicht vorhandenen Bestandteile der genannten Dispersionen, nämlich
. im Falle der Emulsion der Silikonphase (F1), (F2) oder (F3) die katalytische Verbindung und die anderen möglicherweise in dieser Phase nicht vorhandenen Bestandteile;
. im Falle der Emulsion der Silikonphase (F4) das Vernetzungsmittel (B), wenn dieses notwendig ist, sowie die anderen möglicherweise in dieser Phase nicht vorhandenen Bestandteile;
durch Verkneten in dem Kneter in das Medium eingeführt und dispergiert werden, welcher zur Emulgierung gedient hat.

14. Wäßrige Dispersionen nach Anspruch 12 oder 13, **dadurch gekennzeichnet, dass** der Arbeitsschritt des Verknetens in einem einfachen oder multiplen Schneckenextruder, einem Planetenrührwerk, einem Hakenkneter, einer langsamen Dispergiermaschine, einem statischen Kneter, einem Scheibenkneter, einem Schraubenkneter, einem Armkneter, einem Ankerkneter durchgeführt wird.

15. Wäßrige Dispersionen nach einem der Ansprüche 1 bis 14, **dadurch gekennzeichnet, dass** sie außerdem Piastifiziermittel, Verdickungsmittel, Dispergiermittel für Füllstoffe enthalten.

16. Verwendung der wäßrigen Dispersionen nach einem der vorhergehenden Ansprüche zur Anfertigung von elastomeren Anstrichen, von wasserabstoßenden Mitteln für Fassaden, von Abdichtungsverbindungen, von feuerhemmenden elastomeren Produkten.

## Claims

1. Aqueous dispersions of silicone oils comprising:
- at least one organopolysiloxane oil (A) capable of crosslinking into an elastomer by condensation, if necessary in the presence of a crosslinking agent (B);
- if necessary, per 100 parts by weight of oil(s) (A), from 0.1 to 100 parts by weight of at least one crosslinking agent (B);
- optionally, per 100 parts by weight of oil(s) (A), up to 50 parts by weight of at least one silane (C);
- up to 300 parts by weight of a siliceous and/or nonsiliceous mineral filler (D), per 100 parts by weight of oil(s) (A);
- a catalytically effective amount of a catalytic curing compound (E), which may be up to 3 parts by weight per 100 parts of oil (A);
the said dispersions being **characterized in that** they are obtained by a process comprising the following steps:
→ 1) emulsification of a silicone phase made by blending a mixture consisting of:
• 100 parts by weight of a silicone phase (F) with a dynamic viscosity at 25°C of the order of 50 to 1000 Pa.s, this silicone phase comprising the oil or mixture of oils (A), and optionally at least one of the constituents (B), (C), (D) or (E);
• 3-20 parts by weight of at least one surfactant (G) of nonionic type, the HLB value of said surfactant or of the mixture of surfactants being at least 10;
• 2-20 parts by weight of water;
• the water/water + surfactant(s) weight ratio being such that the viscosity of the water + surfactant(s) mixture is in the region of or greater than that of the silicone phase (F) and being located in the range from 20/100 to 70/100;
• the blending operation being performed in a blender equipped with a stirrer, the moving part of this stirrer not rotating at more than 500 rpm, with a tangential speed at the end of the moving part not exceeding 2.5 m/s and with a ratio: tangential speed at the end of the moving part/distance between the end of the moving part and the wall of the blender, of less than 2500 s⁻¹, for a period that is sufficient to obtain an "oil-in-water" emulsion with a particle size of about 0.1 to 5 micrometres;
→ 2) optional dilution with water until a solids content of from 25% to 97% is obtained; and then
→ 3) addition of the constituent(s) not present in the silicone phase (F), which are dispersed in the medium by blending.

2. Aqueous dispersions of silicone oils according to Claim 1, comprising:
- at least one organopolysiloxane oil (A) capable of crosslinking into an elastomer by condensation, if necessary in the presence of a crosslinking agent (B);
- if necessary, per 100 parts by weight of oil(s) (A), from 0.5 to 30 parts by weight of at least one crosslinking agent (B);
- optionally, per 100 parts by weight of oil(s) (A), up to 10 parts by weight of at least one silane (C);
- from 3 to 100 parts by weight of a siliceous and/or nonsiliceous mineral filler (D), per 100 parts by weight of oil(s) (A);
- a catalytically effective amount of a catalytic curing compound (E), which may be up to 3 parts by weight per 100 parts of oil (A);
the said dispersions being **characterized in that** they are obtained by a process comprising the following steps:
→ 1) emulsification of a silicone phase made by blending a mixture consisting of:
• 100 parts by weight of a silicone phase (F) with a dynamic viscosity at 25°C of the order of 50 to 1000 Pa.s, this silicone phase comprising the oil or mixture of oils (A), and optionally at least one of the constituents (B), (C), (D) or (E);
• 5-15 parts by weight of at least one surfactant (G) of nonionic type, the HLB value of said surfactant or of the mixture of surfactants being between 10 and 15;
• 3-15 parts by weight of water;
• the water/water + surfactant(s) weight ratio being such that the viscosity of the water + surfactant(s) mixture is in the region of or greater than that of the silicone phase (F) and being located in the range from 20/100 to 70/100;
• the blending operation being performed in a blender equipped with a stirrer, the moving part of this stirrer not rotating at more than 500 rpm, with a tangential speed at the end of the moving part not exceeding 2.5 m/s and with a ratio: tangential speed at the end of the moving part/distance between the end of the moving part and the wall of the blender, of less than 2500 s⁻¹, for a period that is sufficient to obtain an "oil-in-water" emulsion with a particle size of about 0.2 to 2 micrometres;
→ 2) optional dilution with water until a solids content of greater than 70% is obtained; and then
→ 3) addition of the constituent(s) not present in the silicone phase (F), which are dispersed in the medium by blending.

3. Aqueous dispersions according to Claim 1 or 2, **characterized in that** the oils (A) are α,ω-hydroxylated oils or functional oils comprising, per molecule, at least 2 functional groups that may be condensed optionally after hydrolysis.

4. Aqueous dispersions according to any one of Claims 1 to 3, **characterized in that** the oils (A) have the general formula (I) 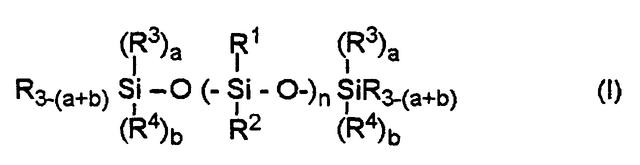 in which formula:
- a is 0 or 1
- b is 0 or 1
- with a + b = 0; 1 or 2
- n has a value that is sufficient to give the polymer of formula (a) the desired viscosity
- the radicals R are identical or different and represent
■ an OH group with a + b = 2;
■ an alkoxy or alkenyloxy group containing from 1 to 10 carbon atoms;
■ an aryloxy group containing from 6 to 13 carbon atoms;
■ an acyloxy group containing from 1 to 13 carbon atoms;
■ a ketiminoxy group containing from 1 to 8 carbon atoms;
■ an amino-functional or amido-functional group containing from 1 to 6 carbon atoms, linked to the silicon via an Si-N bond;
- the radicals R¹ and R² are identical or different and represent alkyl or alkenyl aliphatic organic groups containing from 1 to 10 carbon atoms, or phenyl aromatic groups, said groups optionally being substituted with halogen atoms or cyano groups;
- the radicals R³ and R⁴ are identical or different and represent alkyl, aminoalkyl, polyaminoalkyl, epoxyalkyl or alkenyl aliphatic organic groups, containing from 1 to 13 carbon atoms, or aryl aromatic groups containing from 6 to 13 carbon atoms; at least 2 functional groups that may be condensed optionally after hydrolysis being present per molecule.

5. Dispersions according to Claim 4, **characterized in that** at least 80% of the radicals R¹ to R⁴ represent a methyl group.

6. Aqueous dispersions according to any one of Claims 1 to 5, **characterized in that** the crosslinking agent (B) is colloidal silica, sodium silicate, pyrogenic or precipitation silica, alkali metal organosiliconate, a microemulsion of silsesquioxane resin, a reactive silicone resin of low molecular mass containing alkoxy and acyloxy groups, a silicone resin of high mass, which is insoluble in toluene, a hydroxylated silicone resin, an alkoxysilane, an alkylaminosilane or an alkylamidosilane.

7. Aqueous dispersions according to any one of Claims 1 to 6, **characterized in that** the silane (C) is a byproduct of the synthesis of oils (A) and has the formula
(R⁵)_{c}Si(R)_{4-c}
in which formula
- c is 0; 1 or 2
- the radicals R⁵, which may be identical or different, correspond to the radicals R³ and R⁴ of the oil (A) of formula (I)
- the radical R corresponds to the organic radical R of the polyorganosiloxane oil (A) of formula (I)
said silane being present in amounts of about from 0 to 10 parts by weight per 100 parts of oil(s) (A).

8. Aqueous dispersions according to any one of Claims 1 to 6, **characterized in that** the silane (C), is an adhesion-modifying additive such as aminopropyltriethoxysilane, aminopropylmethyldiethoxysilane or glycidoxypropyltrimethoxysilane, which is present in amounts that may be up to 50% of the weight of oil(s) (A).

9. Aqueous dispersions according to any one of Claims 1 to 8, **characterized in that** the fillers (D) are reinforcing or semi-reinforcing fillers with a particle size from about 0.001 to 300 µm.

10. Aqueous dispersions according to any one of Claims 1 to 9, **characterized in that** the catalytic curing compound (E) is a tin derivative, used in amounts that may range from 0.05 to 1 part by weight per 100 parts of oil (A).

11. Aqueous dispersions according to any one of Claims 1 to 10, **characterized in that** the silicone phase (F) consists of:
- (F1) an oil (A) with a viscosity from about 50 to 1000 Pa.s,
- (F2) a mixture of oils (A), this mixture having a viscosity from about 50 to 1000 Pa.s,
- (F3) a mixture of at least one oil (A) and of at least one crosslinking agent (B) if the latter is necessary and/or a silane (C) and/or at least one filler (D), this mixture having a viscosity from about 50 to 1000 Pa.s,
- or (F4) a mixture of at least one oil (A) and of the catalytic compound (E), optionally in the presence of at least one silane (C) and/or of at least one filler (D).

12. Aqueous dispersions according to any one of Claims 1 to 11, **characterized in that** the "oil-in-water" emulsification of the silicone phase (F) is performed by introducing the silicone phase (F) into a mixure of water + surfactant(s) (G) or by introducing water into a mixture of silicone phase (F) + surfactant(s) (G) and blending at a temperature of about 10 to 50°C.

13. Aqueous dispersions according to any one of Claims 1 to 12, **characterized in that**, after optional dilution of the medium, the constituents of the said dispersions that are not present in the "oil-in-water" emulsion of the silicone phase (F), namely:
• in the case of the emulsion of the silicone phase (F1), (F2) or (F3), the catalytic compound and the other optional constituents not present in the said phase;
• in the case of the emulsion of the silicone phase (F4), the crosslinking agent (B) if this agent is required, and also the other optional constitutents not present in the said phase;
are introduced into and dispersed in the medium by blending in the blender used for the emulsification.

14. Aqueous dispersions according to Claim 12 or 13, **characterized in that** the blending operation is performed in a single-screw or multi-screw extruder, a planetary blender, a hook blender, a slow disperser, a static blender, a paddle blender, an impeller blender, an arm blender or an anchor blender.

15. Aqueous dispersions according to any one of Claims 1 to 14, **characterized in that** they also contain plasticizers, thickeners, dispersants and fillers.

16. Use of the aqueous dispersions which are the subject of any one of the preceding claims, for the manufacture of elastomeric paints, water-repellent agents for facades, leakproofing seals or flame-retardant elastomeric products.
